# EUROPÄISCHE PATENTSCHRIFT

(11) **EP 2 539 198 B1**
(45) Veröffentlichungstag und Bekanntmachung des Hinweises auf die Patenterteilung: **14.06.2017**
(21) Anmeldenummer: 10798266.2
(22) Anmeldetag: 18.12.2010
(51) Int. Cl.: B60W 50/08, B60K 35/00, B60K 6/22, B60K 37/00, B60W 10/06, B60W 10/08, B60W 10/26, B60W 20/00

(54) **ANZEIGEVORRICHTUNG EINES KRAFTFAHRZEUGS UND VERFAHREN ZUM GENERIEREN EINER BETRIEBSMODUSANZEIGE AUF EINER ANZEIGEVORRICHTUNG EINES KRAFTFAHRZEUGS**
INDICATING DEVICE FOR A VEHICLE AND METHOD FOR GENERATING AN INDICATION OF AN OPERATION MODUS ON A VEHICLE INDICATING DEVICE
APPAREIL D'AFFICHAGE D'UN VEHICULE AUTOMOBILE ET PROCEDE POUR AFFICHER UN MODE D'OPERATION SUR UN APPAREIL D'AFFICHAGE D'UN VEHICULE AUTOMOBILE

(30) Priorität: 25.02.2010 DE 102010010443
(43) Veröffentlichungstag der Anmeldung: 02.01.2013
(73) Patentinhaber: Dr.Ing. H.C. F. Porsche Aktiengesellschaft, 70435 Stuttgart (DE)
(72) Erfinder: KRAUSS, Lutz, 76187 Karlsruhe (DE); SEEHAUS, Timo, 71711 Steinheim (DE); BÖTTIGER, Albrecht, 71120 Grafenau-Döffingen (DE); HARTMANN, Rolf, 70182 Stuttgart (DE)
(86) Internationale Anmeldenummer: PCT/EP2010/007770
(87) Internationale Veröffentlichungsnummer: WO 2011/103905

(56) Entgegenhaltungen:
- EP-A1- 2 108 558
- WO-A1-2010/037947
- DE-A1- 10 336 542
- DE-A1-102007 004 636
- DE-A1-102007 030 524

## Beschreibung

### Anzeigevorrichtung eines Kraftfahrzeugs

Die Erfindung betrifft eine Anzeigevorrichtung eines Kraftfahrzeugs gemäß dem Oberbegriff des Patentanspruchs 1. Des Weiteren betrifft die Erfindung ein Verfahren zum Generieren einer Betriebsmodusanzeige auf einer Anzeigevorrichtung eines Kraftfahrzeugs gemäß dem Oberbegriff des Patentanspruchs 7.

Ein Hybridfahrzeug, dessen Antriebsaggregat einen Verbrennungsmotor und mindestens eine elektrische Maschine umfasst, kann in unterschiedlichen Betriebsmodi betrieben werden, nämlich zumindest im Betriebsmodus rein elektromotorischen Fahrens und im Betriebsmodus kombiniertes elektro- und verbrennungsmotorisches Fahren. Dann, wenn das Hybridfahrzeug als Sportwagen ausgelegt ist, können weitere Betriebsmodi vorhanden sein, so zum Beispiel ein Betriebsmodus für kombiniertes elektro- und verbrennungsmotorisches Fahren unter Sportbedingungen sowie als weiterer Sonderfall für ein kombiniertes elektro- und verbrennungsmotorisches Fahren elektromotorisches Boosten, wobei beim elektromotorischen Boosten über die oder jede elektrische Maschine des Hybridantriebs kurzzeitig ein hohes elektrisches Antriebsmoment am Antriebsstrang des Kraftfahrzeugs bereitgestellt werden kann.

Die Auswahl des Betriebsmodus für ein Hybridfahrzeug erfolgt fahrerseitig über ein Betriebsmodusauswahlelement des Kraftfahrzeugs, wobei es bereits bekannt ist, den fahrerseitig am Betriebsmodusauswahlelement ausgewählten Betriebsmodus für das Hybridfahrzeug auf einer Anzeigevorrichtung des Kraftfahrzeugs für den Fahrer zu visualisieren, um dem Fahrer eine Kontrolle über den ausgewählten Betriebsmodus zu ermöglichen.

Aus der DE 10 2007 030 524 A1 ist eine Anzeigevorrichtung bekannt, welche dem Fahrer eines Hybridfahrzeuges den Status der Fahrbereitschaft unmissverständlich anzeigt. Hierbei soll insbesondere der Ladezustand des Energiespeichers für den Elektromotor angezeigt werden. Damit erhält der Fahrer die Information wie viel Potential des Elektro-Antriebs ihm noch zur Verfügung steht.

Hiervon ausgehend liegt der vorliegenden Erfindung das Problem zu Grunde ein neuartige Anzeigevorrichtung eines Kraftfahrzeugs mit einer erweiterten Funktionalität sowie ein Verfahren zum Generieren einer Betriebsmodusanzeige auf einer Anzeigevorrichtung eines Kraftfahrzeugs zu schaffen.

Dieses Problem wird durch eine Anzeigevorrichtung gemäß Patentanspruch 1 gelöst. Die erfindungsgemäße Anzeigevorrichtung zeigt bei Anzeige des Betriebsmodus elektromotorisches Boosten eine zur Verfügung stehende Boostdauer.

Die erfindungsgemäße Anzeigevorrichtung zeigt nicht nur den fahrerseitig ausgewählten Betriebsmodus an, sondern dann, wenn als Betriebsmodus elektromotorisches Boosten fahrerseitig ausgewählt wurde, auch die zur Verfügung stehende Boostdauer. Dadurch kann einem Fahrer ein zusätzlicher Informationsgrad zur Verfügung gestellt werden, der es dem Fahrer ermöglicht, das Kraftfahrzeug effizienter zu betreiben.

Nach einer vorteilhaften Weiterbildung der Erfindung generiert eine der Anzeigevorrichtung zugeordnete Steuerungseinrichtung in einem ersten Betätigungsmuster eines Boostauswahlelements bei elektromotorischem Boosten in Standbyfunktion auf der Anzeigevorrichtung eine Anzeige, welche die zum Boosten insgesamt zur Verfügung stehende Boostdauer anzeigt, wobei die Steuerungseinrichtung in einem zweiten Betätigungsmuster des Boostauswahlelements bei aktiviertem elektromotorischem Boosten auf der Anzeigevorrichtung eine Anzeige generiert, welche die beim Boosten restlich zur Verfügung stehende Boostdauer anzeigt.

Dann, wenn einerseits im Standbybetrieb des elektromotorischen Boostens die insgesamt zum Boosten zur Verfügung stehende Boostdauer angezeigt wird, und wenn weiterhin bei aktiviertem Boosten die beim Boosten restlich zur Verfügung stehende Boostdauer angezeigt wird, kann ein optimaler, fahrerseitiger Betrieb des Kraftfahrzeugs gewährleistet werden.

So kann der Fahrer in dem Standbybetrieb des Boostens anhand der angezeigten, insgesamt zur Verfügung stehenden Boostdauer entscheiden, ob eine Aktivierung des elektromotorischen Boosten überhaupt sinnvoll ist.

Die Anzeige der restlich zur Verfügung stehenden Boostdauer bei aktiviertem elektromotorischem Boosten gibt einem Fahrer Aufschluss darüber, wann das durch den Boostbetrieb im Antriebsstrang bereitgestellte Boostmoment nicht mehr zur Verfügung steht und gegebenenfalls durch Betätigen des Fahrpedals ein stärkeres verbrennungsmotorisches Moment abgerufen werden muss.

Das erfindungsgemäße Verfahren zum Generieren einer Betriebsmodusanzeige auf einer Anzeigevorrichtung eines Kraftfahrzeugs ist in Anspruch 7 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Betriebsmodusauswahlelement eines Kraftfahrzeugs, welches ein Boostauswahlelement umfasst;
- Fig. 2: eine schematisierte Darstellung einer erfindungsgemäßen Anzeigevorrichtung eines Kraftfahrzeugs in einem ersten Zustand; und
- Fig. 3: die Anzeigevorrichtung der Fig. 2 in einem zweiten Zustand.

Die Erfindung betrifft eine Anzeigevorrichtung eines Kraftfahrzeugs, nämlich eine Betriebsmodus-Anzeigevorrichtung eines Hybridfahrzeugs, und ein Verfahren zum Generieren einer Betriebsmodusanzeige auf einer solchen Anzeigevorrichtung.

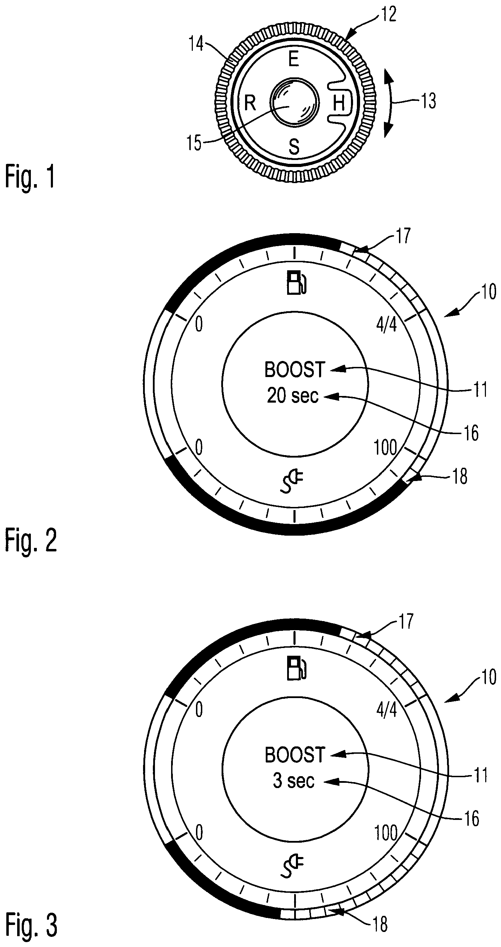

Fig. 2 zeigt eine erfindungsgemäße Anzeigevorrichtung 10 eines Hybridfahrzeugs, über die ein Betriebsmodus des Hybridfahrzeugs anzeigbar ist, nämlich zumindest einer der Betriebsmodi rein elektromotorisches Fahren und/oder rein verbrennungsmotorisches Fahren und/oder kombiniertes elektro- und verbrennungsmotorisches Fahren sowie als Sonderfall des kombinierten elektro- und verbrennungsmotorischen Fahrens elektromotorisches Boosten. In einem ersten Anzeigebereich 11 der Anzeigevorrichtung 10 ist in Fig. 2 als aktueller, fahrerseitig ausgewählter Betriebsmodus elektromotorisches Boosten angezeigt, nämlich in Form der Anzeige "BOOST".

Fig. 1 zeigt ein Betriebsmodusauswahlelement 12 des Hybridfahrzeugs, an welchem fahrerseitig einer von mehreren Betriebsmodi ausgewählt werden kann. So verfügt das Betriebsmodusauswahlelement 12 der Fig. 1 über ein in Richtung des Doppelpfeils 13 verdrehbares Wählelement 14, über welches im gezeigten Ausführungsbeispiel einer von vier Betriebsmodi E, H, S und R fahrerseitig ausgewählt werden kann, wobei es sich beim Betriebsmodus H um kombiniertes elektro- und verbrennungsmotorisches Fahren, beim Betriebsmodus E um rein elektromotorisches Fahren, beim Betriebsmodus S um kombiniertes elektro- und verbrennungsmotorisches Fahren unter Sportbedingungen und beim Betriebsmodus R um ein kombiniertes elektro- und verbrennungsmotorisches Fahren unter Rennbedingungen handelt.

Es sei bereits an dieser Stelle darauf hingewiesen, dass die in Fig. 1 über das Wählelement 14 fahrerseitig anwählbaren Betriebsmodi E,H , S und R rein exemplarischer Natur sind. So kann zum Beispiel der Betriebsmodus R und/oder der Betriebsmodus S entfallen. Zusätzlich kann ein Betriebsmodus für rein verbrennungsmotorisches Fahren vorhanden sein.

Zusätzlich zu dem im Sinne des Doppelpfeils 13 drehbaren Wählelement 14 verfügt das Betriebsmodusauswahlelement 12 weiterhin über ein Boostauswahlelement 15, welches in der Mitte des Betriebsmodusauswahlelements 12 positioniert und als Taster bzw. Betätigungsknopf ausgebildet ist. Durch Drücken des Boostauswahlelements 15 des Betriebsmodusauswahlelements 12 kann insbesondere in den Betriebsmodi H, S und R als Sonderfall des kombinierten, elektro- und verbrennungsmotorischen Fahrens elektromotorisches Boosten aktiviert werden. Im Unterschied hierzu ist es auch möglich, das elektromotorische Boosten ausschließlich in den Betriebsmodi R und S zuzulassen, jedoch nicht im Betriebsmodus H.

Im Sinne der hier vorliegenden Erfindung zeigt nun die Anzeigevorrichtung 10 nicht nur den fahrerseitig am Betriebsmodusauswahlelement 12 ausgewählten Betriebsmodus, sondern zusätzlich im Fall des Betriebsmodus elektromotorisches Boosten eine zur Verfügung stehende Boostdauer an. So verfügt im gezeigten Ausführungsbeispiel die Anzeigevorrichtung 10 unterhalb des ersten Anzeigebereichs 11, in welchem der Betriebsmodus angezeigt wird, über einen zweiten Anzeigebereich 16, mit welchem die zum Boosten zur Verfügung stehende Boostdauer angezeigt wird.

Nach einer vorteilhaften Weiterbildung der hier vorliegenden Erfindung erfolgt die Ansteuerung der Anzeigeeinrichtung 10 über eine nicht gezeigte Steuerungseinrichtung, die zwischen die Anzeigeeinrichtung 10 und das Betriebsmodusauswahlelement 12 geschaltet ist, und abhängig von der fahrerseitigen Betätigung des Betriebsmodusauswahlelements 12 im Anzeigebereich 11 der Anzeigevorrichtung 10 den Betriebsmodus anzeigt.

Die Steuerungseinrichtung generiert weiterhin in einem ersten Betätigungsmuster des Boostauswahlelements 15 bei elektromotorischem Boosten in Standbyfunktion auf der Anzeigevorrichtung 10, nämlich im Anzeigebereich 16 derselben, eine Anzeige, welche die zum Boosten insgesamt zur Verfügung stehende Boostdauer anzeigt.

So kann zum Beispiel vorgesehen sein, dass nach einmaligem, kurzzeitigem Betätigen des Boostauswahlelements 15 eine bislang inaktivierte Boostfunktion für elektromotorisches Boosten zunächst in eine Standbyfunktion überführt wird und dann im Anzeigebereich 16 gesteuert durch die Steuerungseinrichtung die auf Grundlage der Speicherkapazität des elektrischen Energiespeichers zum Boosten insgesamt zur Verfügung stehende Boostdauer angezeigt wird, um so dem Fahrer eine Abschätzung zu ermöglichen, ob das Aktivieren des elektromotorischen Boostens abhängig von der aktuellen Fahrsituation überhaupt sinnvoll ist.

In einem zweiten Betätigungsmuster des Boostauswahlelements 15, so zum Beispiel bei permanentem Betätigen des Boostauswahlelements 15, kann bei aktiviertem Boosten im Anzeigebereich 16 der Anzeigevorrichtung 10 im Sinne eines rückwärts laufenden Countdowns die beim Boosten restlich zur Verfügung stehende Boostdauer angezeigt werden, um so dem Fahrer eine Information darüber zu geben, wann das durch elektromotorisches Boosten am Antriebsstrang bereitgestellte Antriebsmoment zusammenbricht und gegebenenfalls durch stärkeres Betätigen des Fahrpedals und Abrufen von zusätzlichem verbrennungsmotorischem Antriebsmoment kompensiert werden muss.

Eine dahingehende Differenzierung, ob sich die Boostfunktion in Standbyfunktion befindet oder aktiviert ist und ob die angezeigte Boostdauer die insgesamt zur Verfügung stehende Boostdauer oder die restlich zur Verfügung stehende Boostdauer ist, kann in der Anzeigevorrichtung 10 dadurch erfolgen, dass in den Anzeigebereichen 11 und/oder 16 der Betriebsmodus und/oder die zum Boosten zur Verfügung stehende Boostdauer in unterschiedlichen Anzeigemodi angezeigt werden.

So ist es zum Beispiel möglich, bei Boosten in Standbyfunktion die Anzeigen in Anzeigebereichen 11 und 16 im Sinne eines pulsierenden Blinkens und im Fall eines aktivieren Boostens im Sinne einer permanenten Anzeige zu gestalten. Diese Differenzierung kann alternativ oder zusätzlich auch über unterschiedliche Farben realisiert werden, wobei dann zum Beispiel bei Boosten in Standbyfunktion die Anzeigebereiche 11 und 16 der Anzeigevorrichtung 10 in einer ersten Farbe und bei aktiviertem Boosten die Anzeigebereiche 11 und 16 in einer zweiten Farbe erscheinen.

Das Generieren der Betriebsmodusanzeige auf der Anzeigevorrichtung 10 erfolgt demnach abhängig von einer fahrerseitigen Betätigung des Betriebsmodusauswahlelements 12, welches das Boostauswahlelement 15 umfasst, wobei erfindungsgemäß bei Anzeige des Betriebsmodus elektrisches Boosten auch eine zur Verfügung stehende Boostdauer angezeigt wird, nämlich derart, dass in einem ersten Betätigungsmuster des Boostauswahlelements 15 bei Boosten in Standbyfunktion die zum elektromotorischen Boosten insgesamt zur Verfügung stehende Boostdauer angezeigt wird, und wobei in einem zweiten Betätigungsmuster des Boostauswahlelements 15 bei aktiviertem Boosten die beim elektromotorischen Boosten restlich zur Verfügung stehende Boostdauer im Sinne eines rückwärts laufenden Countdowns angezeigt wird. Dies ermöglicht ein besonders effektives, fahrerseitiges Einsetzen eines elektromotorischen Boostens abhängig von einer Fahrsituation.

Die Steuerungseinrichtung, welche abhängig von der Betätigung des Boostauswahlelements 15 die zur Verfügung stehende Boostdauer anzeigt, benötigt hierzu als Information lediglich eine Speicherkapazität eines elektrischen Energiespeichers des Hybridfahrzeugs, die zum elektromotorischen Boosten zur Verfügung steht.

Die Anzeigevorrichtung 10 ist vorzugsweise Bestandteil eines Kombiinstruments. Dabei dient gemäß Fig. 2 und 3 die Anzeigevorrichtung 10 auch der Anzeige eines Füllstands eines Kraftstofftanks sowie eines Ladezustands eines elektrischen Energiespeichers, nämlich in einem Anzeigebereich 17 der Füllstandsanzeige des Kraftstofftanks und in einem Anzeigebereich 18 der Ladezustandsanzeige des elektrischen Energiespeichers.

Die Anzeigevorrichtung 10 zeigt in Fig. 3 im Unterscheid zur Fig. 2 eine verkürzte restlich zur Verfügung stehende Boostdauer an, wobei sich im Anzeigezustand der Fig. 3 durch das Boosten der Ladezustand des elektrischen Energiespeichers verringert hat.

## Patentansprüche

1. Anzeigevorrichtung eines Kraftfahrzeugs, über die ein Betriebsmodus eines Hybridfahrzeugs anzeigbar ist, nämlich zumindest einer der Betriebsmodi rein elektromotorisches Fahren und/oder rein verbrennungsmotorisches Fahren und/oder kombiniertes elektro- und verbrennungsmotorisches Fahren und als Sonderfall des kombinierten elektro- und verbrennungsmotorischen Fahrens elektromotorisches Boosten, wobei bei Anzeige des Betriebsmodus elektromotorisches Boosten zusätzlich zum Betriebsmodus eine zur Verfügung stehende Boostdauer angezeigt ist, **dadurch gekennzeichnet, dass** bei aktiviertem Boosten die restlich zur Verfügung stehende Boostdauer im Sinne eines rückwärtslaufenden Countdown angezeigt ist.

2. Anzeigevorrichtung nach Anspruch 1, **dadurch gekennzeichnet, dass** derselben eine Steuerungseinrichtung zugeordnet ist, welche die Anzeigevorrichtung (10) derart ansteuert, dass die Anzeigevorrichtung in einem ersten Anzeigebereich (11) einen an einem Betriebsmodusauswahlelement(12) fahrerseitig ausgewählten Betriebsmodus anzeigt, wobei das Betriebsmodusauswahlelement (12) ein Boostauswahlelement (15) umfasst.

3. Anzeigevorrichtung nach Anspruch 2, **dadurch gekennzeichnet, dass** die Steuerungseinrichtung in einem definierten Betätigungsmuster des Boostauswahlelements (15) bei elektromotorischem Boosten in Standbyfunktion auf der Anzeigevorrichtung in einem zweiten Anzeigebereich (16) derselben eine Anzeige generiert, welche die zum Boosten insgesamt zur Verfügung stehende Boostdauer anzeigt.

4. Anzeigevorrichtung nach Anspruch 2 oder 3, **dadurch gekennzeichnet, dass** die Steuerungseinrichtung in einem definierten Betätigungsmuster des Boostauswahlelements (15) bei aktiviertem elektromotorischem Boosten auf der Anzeigevorrichtung in einem zweiten Anzeigebereich (16) derselben eine Anzeige generiert, welche die beim Boosten restlich zur Verfügung stehende Boostdauer anzeigt.

5. Anzeigevorrichtung nach Anspruch 3 oder 4, **dadurch gekennzeichnet, dass** eine Boostfunktion in Standbyfunktion oder eine aktivierte Boostfunktion und/oder die insgesamt zur Verfügung stehende Boostdauer oder die restlich zur Verfügung stehende Boostdauer jeweils in unterschiedlichen Anzeigemodi anzeigbar ist bzw. sind.

6. Anzeigevorrichtung nach einem der Ansprüche 1 bis 5, **dadurch gekennzeichnet, dass** dieselbe Bestandteil eines Kombiinstruments ist.

7. Verfahren zum Generieren einer Betriebsmodusanzeige auf einer Anzeigevorrichtung eines Kraftfahrzeugs, welches ein Betriebsmodusauswahlelement mit einem Boostauswahlelement umfasst, wobei auf der Anzeigevorrichtung ein an dem Betriebsmodusauswahlelement fahrerseitig ausgewählter Betriebsmodus angezeigt wird, wobei bei Anzeige des Betriebsmodus elektromotorisches Boosten eine zur Verfügung stehende Boostdauer angezeigt wird, **dadurch gekennzeichnet, dass** bei aktiviertem Boosten die restlich zur Verfügung stehende Boostdauer im Sinne eines rückwärtslaufenden Countdown angezeigt wird.

8. Verfahren nach Anspruch 7, **dadurch gekennzeichnet, dass** in einem ersten Betätigungsmuster des Boostauswahlelements bei elektromotorischem Boosten in Standbyfunktion die zum Boosten insgesamt zur Verfügung stehende Boostdauer angezeigt wird.

9. Verfahren nach Anspruch 7 oder 8, **dadurch gekennzeichnet, dass** in einem zweiten Betätigungsmuster des Boostauswahlelements bei aktiviertem elektromotorischem Boosten die beim Boosten restlich zur Verfügung stehende Boostdauer angezeigt wird.

## Claims

1. Display apparatus of a motor vehicle by means of which an operating mode of a hybrid vehicle can be displayed, specifically at least one of the operating modes of driving purely by electric motor and/or driving purely by internal combustion engine and/or combined driving by electric motor and internal combustion engine and, as a special case of combined driving by electric motor and internal combustion engine, boosting by electric motor, wherein, when the operating mode of boosting by electric motor is displayed, an available boost duration is displayed in addition to the operating mode, **characterized in that** the remaining available boost duration is displayed in the manner of a reverse countdown in the case of activated boosting.

2. Display apparatus according to Claim 1, **characterized in that** a control device is associated with said display apparatus, said control device actuating the display apparatus (10) in such a way that the display apparatus displays an operating mode which is selected by the driver using an operating mode selection element (12) in a first display region (11), wherein the operating mode selection element (12) comprises a boost selection element (15).

3. Display apparatus according to Claim 2, **characterized in that** the control device generates a display, which displays the total available boost duration for boosting, on the display apparatus in a second display region (16) of said display apparatus in a defined operating pattern of the boost selection element (15) in the standby function in the case of boosting by electric motor.

4. Display apparatus according to Claim 2 or 3, **characterized in that** the control device generates a display, which displays the remaining available boost duration during boosting, on the display apparatus in a second display region (16) of said display apparatus in a defined operating pattern of the boost selection element (15) in the case of activated boosting by electric motor.

5. Display apparatus according to Claim 3 or 4, **characterized in that** a boost function in the standby function or an activated boost function and/or the total available boost duration or the remaining available boost duration can each be displayed in different display modes.

6. Display apparatus according to one of Claims 1 to 5, **characterized in that** said display apparatus is a constituent part of a combination instrument.

7. Method for generating an operating mode display on a display apparatus of a motor vehicle, which comprises an operating mode selection element with a boost selection element, wherein an operating mode which is selected by the driver using the operating mode selection element is displayed on the display apparatus, wherein an available boost duration is displayed when the operating mode of boosting by electric motor is displayed, **characterized in that** the remaining available boost duration is displayed in the manner of a reverse countdown in the case of activated boosting.

8. Method according to Claim 7, **characterized in that** the total available boost duration for boosting is displayed in a first operating pattern of the boost selection element in the standby function in the case of boosting by electric motor.

9. Method according to Claim 7 or 8, **characterized in that** the remaining available boost duration during boosting is displayed in a second operating pattern of the boost selection element in the case of activated boosting by electric motor.

## Revendications

1. Dispositif d'affichage d'un véhicule automobile au moyen duquel peut être affiché un mode de fonctionnement d'un véhicule hybride, à savoir au moins un des modes de fonctionnement parmi la conduite exclusivement par moteur électrique et/ou la conduite exclusivement par moteur à combustion interne et/ou la conduite combinée par moteur électrique et par moteur à combustion interne et, comme cas particulier de la conduite combinée par moteur électrique et par moteur à combustion interne, l'amplification par moteur électrique, une durée d'amplification disponible étant affichée lors de l'affichage du mode de fonctionnement amplification par moteur électrique en plus du mode de fonctionnement, **caractérisé en ce que**, quand l'amplification est activée, la durée d'amplification disponible restante est affichée dans le sens d'un compte à rebours.

2. Dispositif d'affichage selon la revendication 1, **caractérisé en ce que**, à celui-ci est affecté un dispositif de commande qui commande le dispositif d'affichage (10) de telle sorte que le dispositif d'affichage affiche dans une première zone d'affichage (11) un mode de fonctionnement sélectionné côté conducteur sur un élément de sélection de mode de fonctionnement (12), l'élément de sélection de mode de fonctionnement (12) comprenant un élément de sélection d'amplification (15).

3. Dispositif d'affichage selon la revendication 2, **caractérisé en ce que**, dans un modèle d'actionnement défini de l'élément de sélection d'amplification (15), lors de l'amplification par moteur électrique en fonction standby, le dispositif de commande génère sur le dispositif d'affichage, dans une deuxième zone d'affichage (16) de celui-ci, un affichage qui affiche la durée d'amplification disponible au total pour l'amplification.

4. Dispositif d'affichage selon la revendication 2 ou 3, **caractérisé en ce que**, dans un modèle d'actionnement défini de l'élément de sélection d'amplification (15), quand l'amplification par moteur électrique est activée, le dispositif de commande génère sur le dispositif d'affichage, dans une deuxième zone d'affichage (16) de celui-ci, un affichage qui affiche la durée d'amplification disponible restante lors de l'amplification.

5. Dispositif d'affichage selon la revendication 3 ou 4, **caractérisé en ce qu'**une fonction d'amplification en fonction standby ou une fonction d'amplification activée et/ou la durée d'amplification disponible au total ou la durée d'amplification disponible restante peut ou respectivement peuvent être affichée(s) respectivement dans différents modes d'affichage.

6. Dispositif d'affichage selon l'une des revendications 1 à 5, **caractérisé en ce que** ce dispositif est un composant d'un instrument combiné.

7. Procédé de génération d'un affichage de mode de fonctionnement sur un dispositif d'affichage d'un-véhicule automobile, qui comprend un élément de sélection de mode de fonctionnement avec un,élément de sélection d'amplification, un mode de fonctionnement sélectionné côté conducteur sur l'élément de sélection de mode de fonctionnement étant affiché sur le dispositif d'affichage, une durée d'amplification disponible étant affichée lors de l'affichage du mode de fonctionnement amplification par moteur électrique, **caractérisé en ce que**, quand l'amplification est activée, la durée d'amplification disponible restante est affichée dans le sens d'un compte à rebours.

8. Procédé selon la revendication 7, **caractérisé en ce que**, dans un premier modèle d'actionnement de l'élément de sélection d'amplification, lors de l'amplification par moteur électrique en fonction standby, la durée d'amplification disponible au total pour l'amplification est affichée.

9. Procédé selon la revendication 7 ou 8, **caractérisé en ce que**, dans un deuxième modèle d'actionnement de l'élément de sélection d'amplification, quand l'amplification par moteur électrique est activée, la durée d'amplification disponible restante lors de l'amplification est affichée.
